**Europäisches Patentamt**

**European Patent Office**

**Office européen des brevets**

(19)

(11) Veröffentlichungsnummer : **0 521 183 B1**

(12) # EUROPÄISCHE PATENTSCHRIFT

(45) Veröffentlichungstag der Patentschrift :
**01.03.95 Patentblatt 95/09**

(51) Int. Cl.$^6$ : **H02P 5/40,** H02M 1/12

(21) Anmeldenummer : **91111162.3**

(22) Anmeldetag : **04.07.91**

(54) **Verfahren und Vorrichtung zur Bestimmung eines Grundschwingungsstrom-Raumzeigers eines gemessenen Ständerstrom-Raumzeigers.**

(43) Veröffentlichungstag der Anmeldung :
**07.01.93 Patentblatt 93/01**

(45) Bekanntmachung des Hinweises auf die
Patenterteilung :
**01.03.95 Patentblatt 95/09**

(84) Benannte Vertragsstaaten :
**CH DE FR GB LI**

(56) Entgegenhaltungen :
**WO-A-91/03867**
**WO-A-91/07810**
**US-A- 4 964 027**

(73) Patentinhaber : **SIEMENS
AKTIENGESELLSCHAFT
Wittelsbacherplatz 2
D-80333 München (DE)**

(72) Erfinder : **Holtz, Joachim, Prof. Dr.-Ing.
Am Forsthof 16
W-5600 Wuppertal 1 (DE)**
Erfinder : **Beyer, Bernd, Dipl.-Ing
Ravensberger Strasse 13
W-5600 Wuppertal 1 (DE)**

EP 0 521 183 B1

## Beschreibung

Die Erfindung bezieht sich auf ein Verfahren und eine Vorrichtung zur Bestimmung eines Grundschwingungsstrom-Raumzeigers eines gemessenen Ständerstrom-Raumzeigers einer stromrichtergespeisten Induktionsmaschine.

Beim Betrieb von Pulsstromrichtern in Drehstromantrieben großer Leistung ist man bemüht, die Schaltfrequenz gering zu halten, um die Höhe der Schaltverluste zu begrenzen. Dies geht allerdings zu Lasten erhöhter Verzerrungsströme auf der Drehstromseite. Die Folge sind erhöhte Verluste in der Maschine, höhere Spitzenwerte des Laststromes und höhere Drehmomentpulsationen.

Bei Stromrichtern, die mit niedriger Schaltfrequenz arbeiten, ist die Erfassung von Betrag und Phasenwinkel des Grundschwingungsstrom-Raumzeigers mit hoher Frequenzbandbreite problematisch. Für eine Istwertrückführung für eine überlagerte Stromregelung wird eine schnelle Erfassung des Grundschwingungsstrom-Raumzeigers benötigt.

Aus der internationalen Patentanmeldung WO 91/07810 ist ein Verfahren und eine Vorrichtung zur Korrektur eines ermittelten, fehlerbehafteten Istwertes eines oberschwingungsbehafteten Signals bekannt. Das fehlerbehaftete Signal wird mittels einer integrierenden Istwert-Erfassungseinrichtung von einem oberschwingungsbehafteten Signal ermittelt. Diese integrierende Istwert-Erfassungseinrichtung ist in der Zuleitung einer stromrichtergespeisten Asynchronmaschine angeordnet. Die Schaltzustandssignale des Stromrichters werden mit Hilfe eines Modulators bzw. eines Steuersatzes aus einem oberschwingungsfreien Stellsignal über eine approximierende Modulationsfunktion erzeugt. Aus diesem oberschwingungsbehafteten Signal und dem oberschwingungsfreien Stellsignal wird zunächst ein Oberschwingungssignal gewonnen, aus dem mittels eines Ersatzmodells der Regelstrecke und einer zweiten integrieren Istwert-Erfassungseinrichtung fortlaufend Korrekturwerte (Mittelwerte der am Ausgang des Ersatzmodells anstehenden Modellsignals) ermittelt werden. Diese Korrekturwerte werden mittels eines Vergleichers von den ermittelten Istwerten des oberschwingungsbehafteten Signals, die jeweils am Ende eines Torzeitintervalls am Ausgang der ersten integrierenden Istwert-Erfassungseinrichtung anstehen, abgezogen. Als Ersatzmodell für die Regelstrecke, bestehend aus einer stromrichtergespeisten Asynchronmaschine, ist im einfachsten Fall eine Induktivität vorgesehen. Der Wert der Induktivität entspricht der Streuinduktivität der Asynchronmaschine.

Bei diesem Verfahren und dieser Vorrichtung zur Korrektur eines ermittelten fehlerbehafteten Istwertes eines oberschwingungsbehafteten Signals ist vorausgesetzt worden, daß der Modellparameter (Streuinduktivität) konstant ist. Die tatsächliche Streuinduktivität ändert sich mit dem aktuellen Arbeitspunkt der Maschine, d.h., die Streuinduktivität kann sich als Folge der Sättigung schnell ändern.

Wird als Stromrichter für die Speisung einer Induktionsmaschine ein spannungseinprägender Umrichter verwendet, wird die Amplitude des Oberschwingungsstrom-Istzeigers von der Höhe der Zwischenkreisspannung beeinflußt.

Der Erfindung liegt nun die Aufgabe zugrunde, ein Verfahren und eine Vorrichtung anzugeben, mit der fehlerfrei ein Grundschwingungsstrom-Raumzeiger eines gemessenen Ständerstrom-Raumzeigers einer stromrichtergespeisten Induktionsmaschine schnell erfaßt werden kann.

Diese Aufgabe wird erfindungsgemäß mit den Merkmalen des Anspruchs 1 und 7 bzw. 2 und 8 gelöst.

Bei diesem Verfahren wird in Abhängigkeit eines Steuerspannungs-Zeigers und eines gemessenen Ständerspannungs-Raumzeigers einer Induktionsmaschine zunächst ein Oberschwingungs-Modellstrom-Istzeiger bestimmt, der in Abhängigkeit eines errechneten Proportionalitätsfaktors selbständig einem Oberschwingungsstrom-Istzeigers nachgeführt wird. Dabei wird der Proportionalitätsfaktor mittels des bestimmten Oberschwingungs-Modellstrom-Istzeigers und des bestimmten Grundschwingungsstrom-Raumzeigers berechnet. Dadurch wird mittels des gemessenen Ständerspannungs-Raumzeigers, des gemessenen Ständerstrom-Raumzeigers und des Steuerspannungs-Zeigers ein ermittelter Oberschwingungs-Modellstrom-Istzeiger ständig einem wechselnden Arbeitspunkt der stromrichtergespeisten Induktionsmaschine nachgeführt, so daß ein Grundschwingungsstrom-Raumzeiger eines gemessenen Ständerstrom-Raumzeigers durch Subtraktion des geführten Oberstrom-Istzeigers vom gemessenen Ständerstrom-Raumzeiger ermittelt wird.

Der Vorteil dieses Verfahrens ist darin zu sehen, daß die Anpassung des im Modell berechneten Oberschwingungs-Modellstrom-Istzeigers an den tatsächlichen Oberschwingungsstrom-Istzeigers über den berechneten Proportionalitätsfaktor selbständig nachgeführt wird. Außerdem können damit arbeitspunktabhängige Änderungen der Maschineninduktivität sowie Schwankungen der Zwischenkreisspannung ausgeglichen werden. Ein weiterer Vorteil dieses Verfahrens und dieser Vorrichtung besteht darin, daß aus dem berechneten Proportionalitätsfaktor die Maschinenstreuinduktivität einfach bestimmt werden kann, weil der Proportionalitätsfaktor das Verhältnis des Modellparameters zum Maschinenparameter angibt. Dieser Vorteil kann genutzt werden, wenn bei einer übergeordneten Regelung beispielsweise der Parameter Maschinenstreuinduktivität verwendet werden muß.

Beim zweiten Verfahren und bei der zweiten Vorrichtung, die die Aufgabe erfindungsgemäß lösen, wird anstelle des Oberschwingungs-Modellstrom-Istzeigers ein Oberschwingungs-Modellstrom-Sollzeiger verwendet. Dieser Oberschwingungs-Modellstrom-Sollzeiger wird in Abhängigkeit des Steuerspannungs-Zeigers und einer Folge diskreter, komplexer Schaltzustands-Zeiger bestimmt, wobei diese Folge diskreter, komplexer Schaltzustands-Zeiger in Abhängigkeit des Steuerspannungs-Zeigers und der Drehfrequenz mittels eines ausgewählten optimierten Pulsmusters im Steuersatz der Induktionsmaschine bestimmt wird. Durch die Verwendung dieses Oberschwingungs-Modellstrom-Sollzeigers enthält der ermittelte Grundschwingungsstrom-Raumzeiger auch transiente Stromanteile. Außerdem wird gegenüber dem ersten Verfahren und der ersten Vorrichtung der Ständerspannungs-Raumzeiger nicht benötigt, so daß sich die Genauigkeit des Verfahrens erhöht.

Bei einer vorteilhaften Ausgestaltung der beiden erfindungsgemäßen Vorrichtungen zur Bestimmung des Grundschwingungsstrom-Raumzeigers eines gemessenen Ständerstrom-Raumzeigers ist jeweils als Vorrichtung ein Mikrocomputer vorgesehen, der vorteilhafterweise Bestandteil des Steuersatzcomputers sein kann.

Zur weiteren Erläuterung der Erfindung wird auf die Zeichnung Bezug genommen, in der jeweils ein Ausführungsbeispiel einer ersten und einer zweiten Vorrichtung zur Durchführung des erfindungsgemäßen Verfahrens schematisch veranschaulicht sind.

Figur 1      zeigt ein Blockschaltbild einer Ausführungsform einer ersten erfindungsgemäßen Vorrichtung und in

Figur 2      ist ein Blockschaltbild einer Ausführungsform einer zweiten erfindungsgemäßen Vorrichtung dargestellt.

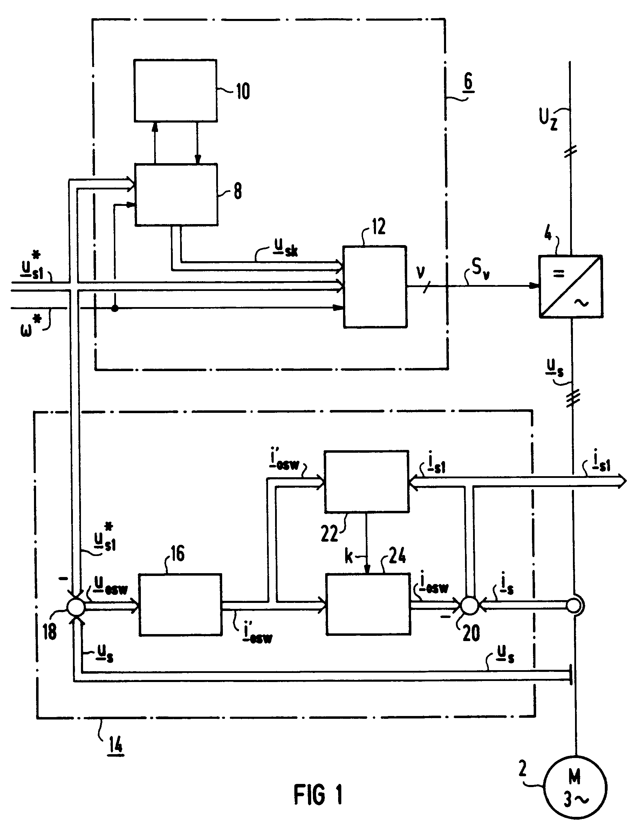

Die Figur 1 zeigt eine dreiphasige Induktionsmaschine 2, die mittels eines Stromrichters 4, insbesondere eines Pulsstromrichters, aus einer Gleichspannungsquelle mit einer vorgegebenen Gleichspannung $U_Z$ gespeist wird. Die Schaltzustandssignale $S_v$, die die Stromrichterventile des Wechselrichters 4 steuern, werden in Abhängigkeit eines Steuerspannungs-Zeigers $\underline{u}_{s1}^{*}$ und einer Drehfrequenz $\omega*$ mittels einer Vorrichtung 6 erzeugt. Die Anzahl der erzeugten Schaltzustandssignale $S_v$ hängt von der Stromrichterschaltung des Wechselrichters 4 ab. Ist der Aufbau des Wechselrichters 4 eine Drehstrom-Brückenschaltung, so werden die Schaltzustandssignale $S_1$, $S_2$ und $S_3$ erzeugt. Ist als Wechselrichter 4 ein Dreipunktwechselrichter vorgesehen, so werden die Schaltzustandssignale $S_1,...,S_6$ erzeugt. Für große Leistungen ist der Pulsstromrichter 4 ein Dreipunktwechselrichter, dessen Schaltfrequenz gering gehalten wird, um die Schaltverluste zu begrenzen.

Der eingangsseitige Steuerspannungs-Zeiger $\underline{u}_{s1}^{*}$ der Vorrichtung 6, auch Steuersatz oder Modulator genannt, ist der Sollwert des Ständerspannungs-Raumzeigers $\underline{u}_s$ der Maschine 2, der als eine stetige Grundschwingungsgröße aufzufassen ist. Dieser Sollzeiger $\underline{u}_{s1}^{*}$ wird von einer übergeordneten Regeleinrichtung erzeugt, die aus Übersichtlichkeitsgründen nicht dargestellt ist. Eine solche Regeleinrichtung kann beispielsweise nach dem Verfahren der Feldorientierung arbeiten. Die Drehfrequenz $\omega*$ ist der Sollwert der Drehfrequenz des Motors 2.

Der Steuersatz 6 enthält einen Pulsweitenmodulator 8 mit zugeordnetem Speicher 10 und eine Einrichtung 12 zum Erzeugen von Schaltzustandssignalen $S_v$. Der eingangs am Steuersatz 6 anstehende Steuerspannungs-Zeiger $\underline{u}_{s1}^{*}$ wird dem Pulsweitenmodulator 8, der Einrichtung 12 und einer Vorrichtung 14 zur Bestimmung eines Grundschwingungsstrom-Raumzeigers $\underline{i}_{s1}$ zugeführt. Die Drehfrequenz $\omega*$, die ebenfalls eine Eingangsgröße des Steuersatzes 6 ist, wird dem Pulsweitenmodulator 8 und der Einrichtung 12 zugeführt. Der Ausgang des Pulsweitenmodulators 8 ist einerseits mit einem Eingang der Einrichtung 12 zur Erzeugung der Schaltzustandssignale $S_v$ verknüpft. Der Vorrichtung 14 wird außerdem der Meßwert des Ständerspannungs-Raumzeigers $\underline{u}_s$ zugeführt.

Im Speicher 10 des Steuersatzes 6 sind optimierte, grundschwingungssynchrone Pulsmuster abgespeichert, die nach einem Optimierungskriterium für stationäre Betriebspunkte unterschiedlicher Aussteuerung $a_l$ offline vorausberechnet sind. Der Pulsweitenmodulator 8 dieses Steuersatzes 6 erzeugt nach Maßgabe des Spannungssollwert-Zeigers $\underline{u}_{s1}^{*}$ eine Folge diskreter, komplexer Schaltzustands-Zeiger $\underline{u}_{sk}$, nachdem in Abhängigkeit von Betrag und Frequenz dieses Sollwertzeigers $\underline{u}_{s1}^{*}$ ein optimiertes Pulsmuster aufgerufen worden ist. Diese Folge diskreter, komplexer Schaltzustands-Zeiger $\underline{u}_{sk}$ wird der Einrichtung 12 zugeführt. In Abhängigkeit des Arguments des Sollwertzeigers $\underline{u}_{s1}^{*}$ bestimmt die Einrichtung 12 aus der Folge diskreter, komplexer Schaltzustands-Zeiger $\underline{u}_{sk}$ den aktuellen Schaltzustand. Außerdem rechnet die Einrichtung 12 die abgespeicherte und als Winkel normierte Pulsbreite in die tatsächliche Zeitdauer anhand der vorgegebenen Drehfrequenzen $\omega*$ um und gibt diese Schaltzustände als Schaltzustandssignal $S_v$ zum Wechselrichter 4 aus.

Bei einer vorteilhaften Ausführungsform des Modulators 6 sind die Bausteine 8, 10 und 12 durch einen Mikrocomputer mit nachgeschalteter Zähleranordnung mit Flip-Flops verwirklicht.

Die Vorrichtung 14 zur Bestimmung eines Grundschwingungsstrom-Raumzeigers $\underline{i}_{s1}$ enthält ein Maschi-

nenmodell 16, zwei Differenzglieder 18 und 20, eine Recheneinheit 22 zur Bestimmung einer Proportionalitätskonstanten k und eine Anpaßeinrichtung 24 zur Nachführung eines Oberschwingungs-Modellstrom-Istzeigers $\underline{i}'_{osw}$. Dieses Maschinenmodell 16 ist jeweils ein Oberschwingungsersatzmodell der Regelstrecke, das aus einer umrichtergespeisten Induktionsmaschine 2 besteht. Im einfachsten Fall ist das Ersatzmodell eine Induktivität, deren Wert dem Wert der Streuinduktivität $L_\sigma$ der Induktionsmaschine 2 entspricht. Das Maschinenmodell 16 ist eingangsseitig mit einem Ausgang des ersten Differenzglied 18 verknüpft, an dessem Plus-Eingang ein Meßwert des Ständerspannungs-Raumzeigers $\underline{u}_s$ und an dessem Minus-Eingang der Steuerspannungs-Zeiger $\underline{u}^*_{s1}$ anstehen. Ausgangsseitig ist dieses Maschinenmodell 16 einerseits mit der Recheneinheit 22 und andererseits mit der Anpaßeinrichtung 24 verknüpft. Ausgangsseitig ist die Anpaßeinrichtung 24 mit einem Minus-Eingang des zweiten Differenzgliedes 20 verbunden, an dessen Plus-Eingang ein gemessener Ständerstrom-Raumzeiger $\underline{i}_s$ der stromrichtergespeisten Induktionsmaschine 2 ansteht. Der Ausgang dieses zweiten Differenzbildners 20 ist einerseits mit einem weiteren Eingang der Recheneinheit 22 und andererseits mit einem Ausgang der Vorrichtung 14 verbunden. Ausgangsseitig ist nun noch die Recheneinheit 22 mit einem weiteren Eingang der Anpaßeinrichtung 24 verknüpft.

Mittels des Maschinenmodells 16 der Vorrichtung 14 wird ein Oberschwingungs-Modellstrom-Istzeiger $\underline{i}'_{osw}$ berechnet. Diese Berechnung stützt sich auf einen ermittelten Oberschwingungsspannungs-Istzeiger $\underline{u}_{osw}$, der mittels des ersten Differenzgliedes 18 aus dem Spannungssollwert-Zeiger $\underline{u}^*_{s1}$ und dem Meßwert des Ständerspannungs-Raumzeigers $\underline{u}_s$ erzeugt wird. Dieser Oberschwingungs-Modellstrom-Istzeiger $\underline{i}'_{osw}$ wird auf der Basis eines vereinfachten Modells der Induktionsmaschine 2 nach folgender Rechenvorschrift gebildet:

$$\underline{i}'_{osw}(t) = 1/L_\sigma \int_{-\infty}^{t} \underline{u}_{osw}(t)\,dt \qquad (1)$$

Dieser berechnete Oberschwingungs-Modellstrom-Istzeiger $\underline{i}'_{osw}$ wird, wie bereits erwähnt, der Recheneinheit 22 und der Anpaßeinrichtung 24 zugeführt. In der Anpaßeinrichtung 24 wird dieser berechnete Oberschwingungs-Modellstrom-Istzeiger $\underline{i}'_{osw}$ an den tatsächlichen Oberschwingungsstrom-Istzeiger $\underline{i}_{osw}$ dadurch angepaßt, daß der Oberschwingungs-Modellstrom-Istzeiger $\underline{i}'_{osw}$ mit dem Proportionalitätsfaktor k multipliziert wird. Dabei wird von einem Proportionalitätsfaktor k=1 ausgegangen.

Der gemessene Ständerstrom-Raumzeiger $\underline{i}_s$ besteht im stationären Fall aus seinem Grundschwingungs-strom-Raumzeiger $\underline{i}_{s1}$ und dem Oberschwingungsstrom-Istzeiger $\underline{i}_{osw}$. Diesen Grundschwingungsstrom-Raumzeiger $\underline{i}_{s1}$ erhält man verzögerungsfrei durch eine Subtraktion, in dem vom gemessenen Ständerstrom-Raumzeiger $\underline{i}_s$ der Oberschwingungsstrom-Istzeiger $\underline{i}_{osw}$ subtrahiert wird. Ausgehend von einem Proportionalitätsfaktor k=1 entspricht der Oberschwingungsstrom-Istzeiger $\underline{i}_{osw}$ dem berechneten Oberschwingungs-Modellstrom-Istzeiger $\underline{i}'_{osw}$. Den durch die Subtraktion erhaltenen Grundschwingungsstrom-Raumzeiger $\underline{i}_{s1}$ wird einerseits der Recheneinheit 22 und andererseits dem Ausgang der Vorrichtung 14 zugeführt.

Der Ansatz zur Bestimmung des Grundschwingungsstrom-Raumzeigers $\underline{i}_{s1}$ geht von folgender Gleichung aus:

$$\underline{i}_s = \underline{i}_{s1} + k\,\underline{i}'_{osw}. \qquad (2)$$

Die Bestimmung des Proportionalitätsfaktors k bzw. des Korrekturfaktors k erfolgt aus dem berechneten Oberschwingungs-Modellstrom-Istzeiger $\underline{i}'_{osw}$ und dem gemessenen Ständerstrom-Raumzeiger $\underline{i}_s$. Alle Berechnungen beziehen sich auf ein feldorientiertes Koordinatensystem, da hier im stationären Zustand der noch unbekannte Grundschwingungsstrom-Raumzeiger $\underline{i}_{s1}$ zu einer konstanten und zeitunabhängigen Größe wird.

Da Wertepaare für den gemessenen Ständerstrom-Raumzeiger $\underline{i}_s$ und den berechneten Oberschwingungs-Modellstrom-Istzeiger $\underline{i}'_{osw}$ bekannt sind und der Grundschwingungsstrom-Raumzeiger $\underline{i}_{s1}$ als konstant angenommen wird, zeigt ein Vergleich der Gleichung (2) mit einer Geradengleichung, daß zur Bestimmung des Proportionalitätsfaktors k die Methode der linearen Regression verwendet werden kann. Nach der Aufspaltung der Gleichung (2) in die Raumzeigerkomponenten

$$i_{sr} = k \cdot i_{oswr} + i_{s1r} \qquad (3)$$

und

$$i_{si} = k \cdot i_{oswi} + i_{s1i} \qquad (4)$$

kann nun der Korrekturfaktor k durch die lineare Regression für beide Komponenten getrennt berechnet werden gemäß folgender Gleichung:

$$k_1 = \frac{N * \sum^N (i_{oswr} * i_{sr}) - \sum^N i_{oswr} * \sum^N i_{sr}}{N * \sum^N i_{oswr}^2 - (\sum^N i_{oswr})^2} \qquad (5)$$

und

$$k_2 = \frac{N * \sum^N (i_{oswi} * i_{si}) - \sum^N i_{oswi} * \sum^N i_{si}}{N * \sum^N i_{oswi}^2 - (\sum^N i_{oswi})^2} \qquad (6)$$

Da diese Faktoren in beiden Komponenten gleich sein müssen, liefert eine anschließende Mittelwertbildung den endgültigen Proportionalitätsfaktor

$$k = 0,5 \cdot (k_1 + k_2).$$

Mit diesem Proportinalitätsfaktor k und den bekannten Oberschwingungs-Modellstrom-Istzeiger $\underline{i}'_{osw}$ kann nun der Grundschwingungsstrom-Raumzeiger $\underline{i}_{s1}$, wie bereits erwähnt, folgendermaßen verzögerungsfrei bestimmt werden:

$$\underline{i}_{s1} = \underline{i}_s - k \cdot \underline{i}'_{osw}. \qquad (7)$$

Wenn die Zwischenkreisspannung $U_Z$ eines Pulswechselrichters als konstant angenommen wird, beschreibt der Proportionalitätsfaktor k das Verhältnis der Modellstreuinduktivität $L_{\sigma M}$ zur Maschinenstreuinduktivität $L_\sigma$, so daß die Maschinenstreuinduktivität $L_\sigma$ folgendermaßen bestimmt werden kann:

$$L_\sigma = L_{\sigma M}/k \qquad (8)$$

Diese Korrektur der Strommessung und die Erfassung der Streuinduktivität kann bei jedem Steuerverfahren angewendet werden, welches es erlaubt, die Oberschwingungen des Stromes zu berechnen. Dies ist neben der Modulation mit optimierten Pulsmustern auch bei der Raumzeigermodulation der Fall.

Der Vorteil dieses Verfahrens ist darin zu sehen, daß die Anpassung der im Modell berechneten Stromoberschwingungen einem tatsächlichen Stromverlauf über dem Proportionalitätsfaktor k selbständig nachgeführt wird. Arbeitspunktabhängige Änderungen der Maschinenstreuinduktivität, sowie Schwankungen der Zwischenkreisspannung werden damit ausgeglichen.

Bei der zweiten Vorrichtung 14 zur Bestimmung des Grundschwingungsstrom-Raumzeigers $\underline{i}_{s1}$ wird anstelle der Berechnung des Oberschwingungs-Modellstrom-Istzeigers $\underline{i}'_{osw}$ aus einem aus dem Steuerspannungs-Zeiger $\underline{u}^*_{s1}$ und dem gemessenen Ständerspannungs-Raumzeiger $\underline{u}_s$ ermittelten Oberschwingungsspannungs-Istzeiger $\underline{u}_{osw}$ die Berechnung eines Oberschwingungs-Modellstrom-Sollzeigers $\underline{i}'_{oswstat}$ verwendet. Dieser Oberschwingungs-Modelstrom-Sollzeiger $\underline{i}'_{oswstat}$ wird in Abhängigkeit des Steuerspannungs-Zeigers $\underline{u}^*_{s1}$ und einer Folge diskreter, komplexer Schaltzustands-Zeiger $\underline{u}_{sk}$ des Steuersatzes 6 berechnet.

Der Oberschwingungs-Sollzeiger $\underline{i}'_{oswstat}(a_i)$ wird auf der Basis eines vereinfachten Modells der Antriebsmaschine 2 nach folgender Rechenvorschrift gebildet:

$$\underline{i}'_{oswstat}(a_i) = 1/L_\sigma \int_0^t (\underline{u}_{sk}(a_i) - \underline{u}_{s1}(a_i)) dt + \underline{c} \qquad (9)$$

mit $a_i$ = konstant.

Dieses Signal $\underline{i}'_{oswstat}(a_i)$ ist die Differenz der Spannungszeitflächen, die aus der für den stationären Betrieb bei Aussteuerung $a_i$ optimierten Schaltfolge $\underline{u}_{sk}(a_i)$ und dem zu dieser Schaltfolge gehörigen Grundschwingungsspannungs-Raumzeiger $\underline{u}_{s1}$ gebildet wird. Dabei ist $a_i$ eine wertdiskrete, veränderliche Größe, die den für veränderliche Aussteuerung vorausberechneten optimierten synchronen Pulsmustern zuzuordnen ist. Die Integrationskonstante $\underline{c}$ bestimmt sich nach

$$\underline{c} = -1/T \int_{t-T}^{t} 1/L_\sigma \int_{0}^{t} (\underline{u}_{sk}(a_i) - \underline{u}_{s1}(a_i))dt \; dt \qquad (10)$$

Dies bedeutet, daß der Wert von Gleichung (9) den im speziellen Fall des stationären Betriebs auftretenden Spannungszeitflächenfehler repräsentiert. Es ist wichtig zu bemerken, daß sich die Auswertung von der Gleichung (9) ausschließlich auf die der Aussteuerung $a_i$ zugeordnete stationäre Pulsfolge $\underline{u}_{sk}(a_i)$ bezieht. Sollte sich in einem nicht stationären Betriebszustand die Aussteuerung $a_i$ des Pulsweitenmodulators 8 ändern, so wird die Gleichung (9) für die im Betrachtungszeitpunkt gültige Aussteuerung so berechnet, als bestehe der gleiche Aussteuerungswert in einem schon für längere Zeit andauernden Stationärzustand.

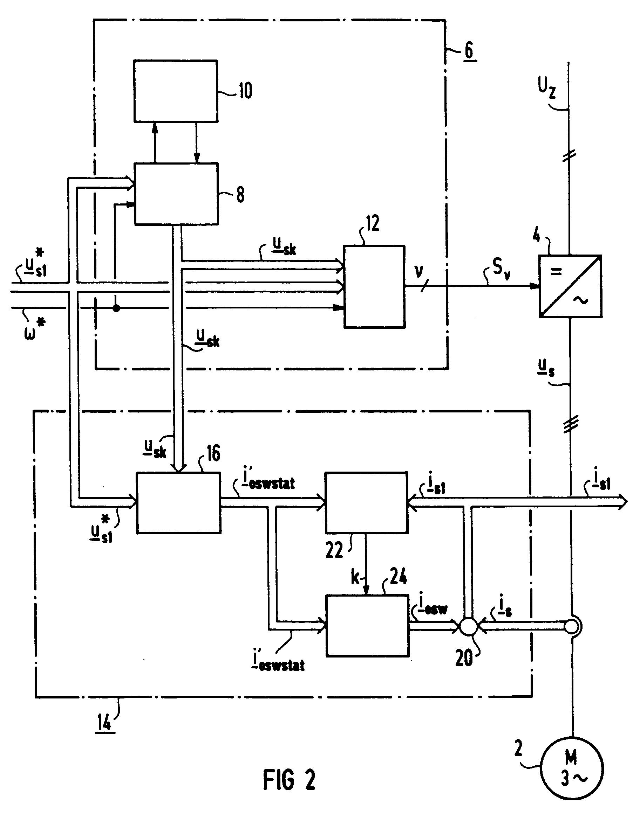

Dieser Oberschwingungs-Modellstrom-Sollzeiger $\underline{i}'_{oswstat}$ wird wie der Oberschwingungs-Modellstrom-Istzeiger $\underline{i}'_{osw}$ der Recheneinheit 22 und der Anpaßeinrichtung 24 zugeführt. Die Berechnung des Proportionalitätsfaktors k und die Anpassung des Modellstrom-Sollwertes $\underline{i}'_{oswstat}$ an den tatsächlichen Oberschwingungsstrom-Istzeiger $\underline{i}_{osw}$ ist gleich der Berechnung bei der ersten Vorrichtung 14. Deshalb sind auch gleiche Blöcke in den beiden Blockschaltbildern der Figuren 1 und 2 mit denselben Bezugszeichen versehen.

Der Vorteil dieser Vorrichtung zur Durchführung des zweiten erfindungsgemäßen Verfahrens liegt darin, daß die Modellgröße $\underline{i}'_{oswstat}$ ohne Zwischenberechnung des Oberschwingungsspannungs-Istzeigers $\underline{u}_{osw}$ in Abhängigkeit des Steuerspannungs-Zeigers $\underline{u}^*_{s1}$ und des gemessenen Ständerspannungs-Raumzeigers $\underline{u}_s$ berechnet werden kann. Dazu wird neben dem Steuerspannungs-Zeiger $\underline{u}^*_{s1}$ eine bereits im Steuersatz 6 bestimmte Größe $\underline{u}_{sk}$ verwendet. Da der Oberschwingungs-Modellstrom-Sollwert $\underline{i}'_{oswtat}$ anstelle des Oberschwingungs-Modellstrom-Istzeigers $\underline{i}'_{osw}$ verwendet wird, enthält der Grundschwingungsstrom-Raumzeiger $\underline{i}_{s1}$ auch transiente Stromanteile.

Jeweils eine besonders vorteilhafte Ausführungsform der Vorrichtung 14 nach Figur 1 und 2 ist die Verwendung eines Mikrocomputers, dem die Signale $\underline{u}^*_{s1}$, $\underline{i}_s$ und $\underline{u}_s$ bzw. $\underline{u}^*_{s1}$, $\underline{u}_{sk}$ und $\underline{i}_s$ zuzuführen sind. Da der Steuersatz 6 in seiner bevorzugten Ausführungsform ebenfalls ein Mikrocomputer ist und die zweite Vorrichtung 14 gemäß Figur 2 ein im Steuersatz 6 bereits bestimmtes Signal $\underline{u}_{sk}$ verwendet, bietet es sich an, entweder die Bestimmung des Grundschwingungsstrom-Raumzeigers $\underline{i}_{s1}$ zusätzlich vom Mikrocomputer des Steuersatzes 6 durchführen zu lassen, oder einen Mikrocomputer vorzusehen, der die Aufgabe des Steuersatzes 6 und der Vorrichtung 14 nach den Figuren 1 und 2 bewerkstelligen kann.

## Patentansprüche

1. Verfahren zur Bestimmung eines Grundschwingungs-Raumzeigers ($\underline{i}_{s1}$) eines gemessenen Ständerstrom-Raumzeigers ($\underline{i}_s$) einer stromrichtergespeisten Induktionsmaschine (2), deren Schaltzustandssignale ($S_v$) in Abhängigkeit eines Steuerspannungs-Zeigers ($\underline{u}^*_{s1}$) und einer Drehfrequenz ($\omega*$) erzeugt werden, wobei in Abhängigkeit dieses Steuerspannungs-Zeigers ($\underline{u}^*_{s1}$) und eines gemessenen Ständerspannungs-Raumzeigers ($\underline{u}_s$) der Induktionsmaschine (2) mittels eines Oberschwingungsersatzmodells der umrichtergespeisten Induktionsmaschine (4,2) ein Oberschwingungs-Modellstrom-Istzeiger ($\underline{i}'_{osw}$) bestimmt wird, aus dem in Abhängigkeit eines berechneten Proportionalitätsfaktors (k) ein Oberschwingungsstrom-Istzeiger ($\underline{i}_{osw}$) berechnet wird, wobei dieser Proportionalitätsfaktor (k) mittels des bestimmten Oberschwingungs-Modellstrom-Istzeigers ($\underline{i}'_{osw}$) und des bestimmten Grundschwingungsstrom-Raumzeigers ($\underline{i}_{s1}$) berechnet wird, wobei dieser Grundschwingungsstrom-Raumzeiger ($\underline{i}_{s1}$) mittels einer Subtraktion des bestimmten Oberschwingungsstrom-Istzeigers ($\underline{i}_{osw}$) von einem gemessenen Ständerstrom-Raumzeiger ($\underline{i}_s$) der stromrichtergespeisten Induktionsmaschine (4,2) berechnet wird.

2. Verfahren zur Bestimmung eines Grundschwingungsstrom-Raumzeigers ($\underline{i}_{s1}$) eines gemessenen Ständerstrom-Raumzeigers ($\underline{i}_s$) einer stromrichtergespeisten Induktionsmaschine (2), deren Schaltzustandssignale ($S_v$) in Abhängigkeit eines Steuerspannungs-Zeigers ($\underline{u}^*_{s1}$) und einer Drehfrequenz ($\omega*$) erzeugt werden, wobei in Abhängigkeit des Steuerspannungs-Zeigers ($\underline{u}^*_{s1}$) und der Drehfrequenz ($\omega*$) mittels eines ausgewählten optimierten Pulsmusters eine Folge diskreter, komplexer Schaltzustands-Zeiger ($\underline{u}_{sk}$) bestimmt wird, wobei in Abhängigkeit dieser Folge diskreter, komplexer Schaltzustands-Zeiger ($\underline{u}_{sk}$) und des Steuerspannungs-Zeigers ($\underline{u}^*_{s1}$) mittels eines Oberschwingungsersatzmodells der umrichtergespeisten Induktionsmaschine (4,2) ein Oberschwingungs-Modellstrom-Sollwert ($i'_{oswstat}$) ermittelt wird, aus dem in Abhängigkeit eines berechneten Proportionalitätsfaktors (k) ein Oberschwingungsstrom-Istzeiger ($i_{osw}$) berechnet wird, wobei dieser Proportionalitätsfaktor (k) mittels des bestimmten Oberschwingungs-Modellstrom-Sollzeigers ($i'_{oswstat}$) und des bestimmten Grundschwingungsstrom-Raumzeigers ($i_{s1}$) berechnet wird, wobei dieser Grundschwingungsstrom-Raumzeiger ($i_{s1}$) mittels einer Subtraktion des bestimmten Oberschwingungsstrom-Istzeigers ($i_{osw}$) von einem gemessenen Ständerstrom-Raumzeiger ($i_s$) der stromrichtergespeisten Induktionsmaschine (4,2) berechnet wird.

3. Verfahren nach Anspruch 1, wobei der Oberschwingungs-Modellstrom-Istzeiger ($i'_{osw}$) gemäß folgender Gleichung:

$$\underline{i}'_{osw}(t) = 1/L_\sigma \int_{-\infty}^{t} \underline{u}_{osw}(t)dt$$

mit

$$\underline{u}_{osw} = \underline{u}_s - \underline{u}^*_{s1}$$

und

$$L_\sigma = L_{\sigma\,M/k}$$

berechnet wird, wobei $L_{\sigma M}$ gleich der Modellstreuinduktivität und k gleich dem ermittelten Proportionalitätsfaktor ist.

4. Verfahren nach Anspruch 2, wobei der Oberschwingungs-Modellstrom-Sollzeiger ($i'_{oswstat}$) gemäß folgender Gleichung:

$$\underline{i}'_{oswstat}(a_i) = 1/L_\sigma \int_{0}^{t} (\underline{u}_{sk}(a_i) - \underline{u}_{s1}(a_i))dt + \underline{c}$$

mit
$a_i$ = const. = Aussteuerung
$\underline{c}$ = Integrationskonstante
berechnet wird, wobei die Integrationskontante ($\underline{c}$) gemäß folgender Gleichung:

$$\underline{c} = -1/T \int_{t-T}^{t} 1/L_\sigma \int_{0}^{t} (\underline{u}_{sk}(a_i) - \underline{u}_{s1}(a_i))dt \; dt$$

bestimmt wird.

5. Verfahren nach Anspruch 1 oder 2, wobei die Proportionalitätskonstante (k) das arithmetische Mittel einer berechneten realen und imaginären Konstanten ($k_1, k_2$), die jeweils unter Verwendung der Methode der linearen Regression bestimmt werden, ist.

6. Verfahren nach Anspruch 5, wobei die reale Komponente (k1) gemäß folgender Gleichung:

$$k1 = \frac{N * \sum\limits^{N} (i_{oswr} * i_{sr}) - \sum\limits^{N} i_{oswr} * \sum\limits^{N} i_{sr}}{N * \sum\limits^{N} i_{oswr}{}^2 - (\sum\limits^{N} i_{oswr})^2}$$

und die imaginäre Komponente (k2) gemäß folgender Gleichung:

$$k2 = \frac{N * \sum\limits^{N} (i_{oswi} * i_{si}) - \sum\limits^{N} i_{oswi} * \sum\limits^{N} i_{si}}{N * \sum\limits^{N} i_{oswi}{}^2 - (\sum\limits^{N} i_{oswi})^2}$$

jeweils berechnet werden.

7. Vorrichtung (14) zur Durchführung des Verfahrens nach Anspruch 1 mit einem Steuersatz (6) für einen Stromrichter (4) mit ausgangsseitig angeschlossener Induktionsmaschine (2), wobei eingangsseitig am Steuersatz (6) ein Steuerspannungs-Zeiger ($\underline{u}_{s1}^*$) und eine Drehfrequenz ($\omega*$) anstehen, wobei dieser Vorrichtung (14) eingangsseitig der Steuerspannungs-Zeiger ($\underline{u}_{s1}^*$), ein gemessener Ständerspannungs-Raumzeiger ($\underline{u}_s$) und ein gemessener Ständerstrom-Raumzeiger ($\underline{i}_s$) zugeführt werden, wobei der gemessene Ständerspannungs-Raumzeiger ($\underline{u}_s$) einem positiven Eingang eines ersten Differenzbildners (18) zugeführt ist, an dessen negativem Eingang der Steuerspannungs-Zeiger ($\underline{u}_{s1}^*$) ansteht und dessen Ausgang über ein Maschinenmodell (16) einerseits mit einer Recheneinheit (22) zur Bestimmung der Proportionalitätskonstanten (k) und andererseits mit einer Anpaßeinrichtung (24) zur Nachführung eines Oberschwingungs-Modellstrom-Istzeigers ($i_{osw}'$) verbunden ist, wobei die Recheneinheit (22) ausgangsseitig mit der Anpaßeinrichtung (24) verbunden ist und wobei der gemessene Ständerstrom-Raumzeiger ($\underline{i}_s$) einem positiven Eingang eines zweiten Differenzbildners (20) zugeführt ist, an dessen negativem Eingang ein erzeugter Oberschwingungsstrom-Zeiger ($\underline{i}_{osw}$) ansteht und dessen Ausgang einerseits mit einem weiteren Eingang der Recheneinheit (22) und andererseits mit einem Ausgang der Vorrichtung (14) verknüpft ist.

8. Vorrichtung (14) zur Durchführung des Verfahrens nach Anspruch 2 mit einem Steuersatz (6) für einen Stromrichter (4) mit ausgangsseitig angeschlossener Drehstrommaschine (2), wobei eingangsseitig am Steuersatz (6) ein Steuerspannungs-Zeiger ($\underline{u}_{s1}^*$) und eine Drehfrequenz ($\omega*$) anstehen, wobei der Steuerspannungs-Zeiger ($\underline{u}*_{s1}$) und eine an einem Ausgang den Steuersatz (6) anstehende Folge diskreter, komplexer Schaltzustands-Zeiger ($\underline{u}_{sk}$) einem Maschinenmodell (16) zugeführt sind, das ausgangsseitig einerseits mit einer Recheneinheit (22) zur Bestimmung der Proportionalitätskonstante (k) und andererseits mit einer Anpaßeinrichtung (24) zur Nachführung eines Oberschwingungs-Modellstrom-Sollzeiger ($i_{oswstat}'$) verbunden ist, wobei die Recheneinheit (22) ausgangsseitig mit der Anpaßeinrichtung (24) verbunden ist und wobei der gemessene Ständerstrom-Raumzeiger ($\underline{i}_s$) einem positiven Eingang eines Differenzbildners (20) zugeführt ist, an dessen negativem Eingang ein erzeugter Oberschwingungsstrom-Zeiger ($\underline{i}_{osw}$) ansteht und dessen Ausgang einerseits mit einem weiteren Eingang der Recheneinheit (22) und andererseits mit einem Ausgang der Vorrichtung (14) verknüpft ist.

9. Vorrichtung (14) nach Anspruch 7 oder 8, wobei als Maschinenmodell (16) ein Integrator vorgesehen ist.

10. Vorrichtung (14) nach Anspruch 7 oder 8, wobei ein Mikrocomputer vorgesehen ist.

## Claims

1. Method for the determination of a fundamental harmonic current space vector ($\underline{i}_{s1}$) of a measured stator

current space vector ($\underline{i}_s$) of a power-converter fed induction machine (2), the switching state signals ($S_v$) for which are generated as a function of a control voltage vector ($\underline{u}*_{s1}$) and a frequency of rotation ($\omega*$), with a harmonic model current actual vector ($\underline{i}'_{osw}$) being determined as a function of this control voltage vector ($\underline{u}*_{s1}$) and a measured stator voltage space vector ($\underline{u}_s$) of the induction machine (2) by means of a harmonic substitution model of the converter-fed induction machine (4, 2), from which a harmonic current actual vector ($\underline{i}_{osw}$) is calculated in dependence on a computed proportionality factor (k), with this proportionality factor (k) being calculated by means of the harmonic model current actual vector ($\underline{i}'_{osw}$) determined and of the fundamental harmonic current space vector ($\underline{i}_{s1}$) determined, with this fundamental harmonic current space vector ($\underline{i}_{s1}$) being calculated by means of subtraction of the harmonic current actual vector ($\underline{i}_{osw}$) determined from measured stator current space vector ($\underline{i}_s$) of the power-converter fed induction machine (4,2).

2. Method for the determination of a fundamental harmonic current space vector ($\underline{i}_{s1}$) of a measured stator current space vector ($\underline{i}_s$) of a power-converter fed induction machine (2), the switching state signals ($S_v$) for which are genarated as a function of a control voltage vector ($\underline{u}*_{s1}$) and a frequency of rotation ($\omega*$), with a sequence of discrete, complex switching state vectors ($\underline{u}_{sk}$) being determined as a function of the control voltage vector ($\underline{u}*_{s1}$) and the frequency of rotation ($\omega*$) by means of a selected, optimized pulse pattern, with a harmonic model current setpoint value ($\underline{i}'_{oswstat}$) being determined as a function of this sequence of discrete, complex switching state vectors ($\underline{u}_{sk}$) and of the control voltage vector ($\underline{u}*_{s1}$) by means of a harmonic substitution model of the converter-fed induction machine (4, 2), from which setpoint value a harmonic current actual vector ($\underline{i}_{osw}$) is calculated as a function of a computed proportionality factor (k), with this proportionality factor (k) being calculated by means of the harmonic model current setpoint value vector ($\underline{i}'_{oswstat}$) determined and of the fundamental harmonic current space vector ($\underline{i}_{s1}$) determined, with this fundamental harmonic current space vector ($\underline{i}_{s1}$) being calculated by means of subtraction of the harmonic current actual vector ($\underline{i}_{osw}$) determined from a measured stator current space vector ($\underline{i}_s$) of the power-converter fed induction machine (4,2).

3. Method in accordance with claim 1, where the harmonic model current actual vector ($\underline{i}'_{osw}$) is calculated in accordance with the following equation:

$$\underline{i}'_{osw}(t) = 1/L_\sigma \int_{-\infty}^{t} \underline{u}_{osw}(t)dt$$

where

$$\underline{u}_{osw} = \underline{u}_s - \underline{u}*_{s1}$$

and

$$L_\sigma = L_{\sigma M/k}$$

where $L_{\sigma M}$ is equal to the model leakage inductance and k is the proportionality factor determined.

4. Method in accordance with claim 2, in which the harmonic model current setpoint value vector ($\underline{i}'_{oswstat}$) is calculated in accordance with the following equation:

$$\underline{i}'_{oswstat}(a_1) = 1/L_\sigma \int_{0}^{t} (\underline{u}_{sk}(a_1) - \underline{u}_{s1}(a_1))dt + \underline{c}$$

where
$a_i$ = constant = modulation
$\underline{c}$ = integration constant,
with the integration constant ($\underline{c}$) being determined in accordance with the following equation:

$$\underline{c} = -1/T \int_{t-T}^{t} 1/L_6 \int_{0}^{t} (\underline{u}_{sk}(a_1) - \underline{u}_{s1}(a_1)) dt \; dt$$

5. Method in accordance with claim 1 or claim 2, in which the proportionality constant (k) is the arithmetic mean of a computed real and imaginary constant ($k_1$, $k_2$), each being determined using the linear regression method.

6. Method in accordance with claim 5, in which the real component ($k_1$) is calculated in accordance with the following equation:

$$k1 = \frac{N * \sum_{oswr}^{N} (i_{oswr} * i_{sr}) - \sum_{oswr}^{N} i_{oswr} * \sum_{sr}^{N} i_{sr}}{N * \sum_{oswr}^{N} i_{oswr}^{2} - (\sum_{oswr}^{N} i_{oswr})^{2}}$$

and the imaginary constant ($k_2$) is calculated in accordance with the following equation

$$k2 = \frac{N * \sum_{oswi}^{N} (i_{oswi} * i_{si}) - \sum_{oswi}^{N} i_{oswi} * \sum_{si}^{N} i_{si}}{N * \sum_{oswi}^{N} i_{oswi}^{2} - (\sum_{oswi}^{N} i_{oswi})^{2}}$$

7. Device (14) for implementing the method in accordance with claim 1 with a control unit (6) for a power converter (4) with an induction machine (2) connected to its output side, with a control voltage vector ($\underline{u}*_{s1}$) and a frequency of rotation ($\omega*$) being applied to the input side of the control unit (6), with the control voltage space vector ($\underline{u}*_{s1}$), a measured stator voltage space vector ($\underline{u}_s$) and a measured stator current space vector ($\underline{i}_s$) being supplied to this device (14) on the input side, with the measured stator voltage space vector ($\underline{u}_s$) being supplied to a positive input of a first comparing element (18), to the negative input of which the control voltage vector ($\underline{u}*_{s1}$) is applied and the output from which is connected by means of a machine model (16) on the one hand to a computing unit (22) for the determination of the proportionality constant (k) and on the other hand to a matching device (24) to correct a harmonic model current actual vector ($i'_{osw}$) with the output from the computer unit (22) being connected to the matching device (24) and with the measured stator current space vector ($\underline{i}_s$) being supplied to a positive input of a second comparing element (20), to the negative input of which a generated harmonic current vector ($\underline{i}_{osw}$) is being applied and the output from which is connected on the one hand with a further input to the computer unit (22) and on the other hand to an output of the device (14).

8. Device (14) to implement the method in accordance with claim 2 with a control unit (6) for a power converter (4) with a polyphase machine (2) connected to its output side, with a control voltage vector ($\underline{u}*_{s1}$) and a frequency of rotation (w*) being applied to the input side of the control unit (6), with the control voltage space vector ($\underline{u}*_{s1}$) and a sequence of discrete, complex switching state vectors ($\underline{u}_{sk}$) at an output side of the control unit (6) being supplied to a machine model (16), the output from which is connected on the one hand to a computer unit (22) for the determination of the proportionality constant (k) and on the other hand to a matching device (24) to correct a harmonic model current setpoint value vector ($i'_{oswstat}$) with the output from the computer unit (22) being connected to the matching device (24) and with the measured stator current space vector ($\underline{i}_s$) being supplied to a positive input of a comparing element (20), to the negative input of which a generated harmonic current vector ($\underline{i}_{osw}$) is being applied and the output from which is connected on the one hand with a further input to the computer unit (22) and on the other hand to an output of the device (14).

9. Device (14) in accordance with claim 7 or claim 8, in which an integrator is provided as the machine model (16).

**10.** Device (14) in accordance with claim 7 or claim 8, in which a microcomputer is provided.

**Revendications**

**1.** Procédé pour déterminer un vecteur spatial d'oscillation de base ($\underline{i}_{s1}$) d'un vecteur spatial mesuré ($\underline{i}_s$) du courant statorique d'une machine à induction (2) alimentée par un convertisseur de courant et dont les signaux d'état de commutation ($s_v$) sont produits en fonction d'un vecteur ($\underline{u}*_{s1}$) de la tension de commande et d'une fréquence angulaire ($w*$), selon lequel, en fonction de ce vecteur ($\underline{u}*_{s1}$) de la tension de commande et d'un vecteur mesuré ($\underline{u}_s$) de la tension statorique de la machine à induction (2), on détermine, au moyen d'un modèle équivalent d'harmonique supérieur de la machine à induction (4,2) alimentée par un mutateur, un vecteur réel ($\underline{i}'_{osw}$) du courant modèle de l'oscillation harmonique, à partir duquel on calcule un vecteur réel ($\underline{i}_{osw}$) du courant de l'oscillation harmonique en fonction d'un facteur de proportionnalité calculé (k), et selon lequel ce facteur de proportionnalité (k) est calculé au moyen du vecteur réel déterminé ($\underline{i}'_{osw}$) du courant modèle de l'harmonique supérieur et du vecteur spatial déterminé ($\underline{i}_{s1}$) du courant de l'oscillation harmonique, et selon lequel ce vecteur spatial ($\underline{i}_{s1}$) du courant de l'oscillation harmonique est calculé au moyen d'une soustraction du vecteur déterminé ($\underline{i}_{osw}$) du courant d'oscillation harmonique, d'un vecteur spatial mesuré ($\underline{i}_s$) du courant statorique de la machine à induction (4,2) alimentée par un convertisseur de courant.

**2.** Procédé suivant la revendication 1 pour déterminer un vecteur spatial d'oscillation de base ($\underline{i}_{s1}$) d'un vecteur spatial mesuré ($\underline{i}_s$) du courant statorique d'une machine à induction (2) alimentée par un convertisseur de courant et dont les signaux d'état de commutation ($s_v$) sont produits en fonction d'un vecteur ($\underline{u}*_{s1}$) de la tension de commande et d'une fréquence angulaire ($\omega*$), selon lequel une suite de vecteurs discrets complexes ($\underline{u}_{sk}$) d'état de commutation est déterminée en fonction du vecteur ($\underline{u}*_{s1}$) de la tension de commande et de la fréquence ($\omega*$), au moyen d'un modèle d'impulsions optimisé sélectionné, et selon lequel une valeur de consigne ($\underline{i}'_{oswstat}$) du courant modèle de l'oscillation harmonique est déterminée en fonction de cette suite de vecteurs discrets complexes ($\underline{u}_{sk}$) de l'état de commutation et du vecteur ($\underline{u}*_{s1}$) de la tension de commande, au moyen d'un modèle équivalent d'oscillation harmonique de la machine à induction (4,2) alimentée par un onduleur, valeur de consigne à partir de laquelle un vecteur réel ($\underline{i}_{osw}$) du courant de l'oscillation harmonique est calculé en fonction d'un facteur de proportionnalité calculé (k), et selon lequel ce facteur de proportionnalité (k) est calculé au moyen du vecteur de consigne ($\underline{i}'_{oswstat}$) déterminé du courant modèle de l'oscillation harmonique et du vecteur spatial déterminé ($\underline{i}_{s1}$) du courant de l'oscillation harmonique, et selon lequel ce vecteur spatial ($\underline{i}_{s1}$) du courant de l'oscillation de base est calculé au moyen d'une soustraction du vecteur réel déterminé ($\underline{i}_{osw}$) du courant de l'oscillation harmonique, d'un vecteur spatial mesuré ($\underline{i}_s$) du courant statorique de la machine à induction (4,2) alimentée par un convertisseur de courant.

**3.** Procédé suivant la revendication 1, selon lequel le vecteur réel ($\underline{i}'_{osw}$) du courant modèle de l'oscillation harmonique est calculé conformément à la relation suivante

$$\underline{i}'_{osw}(t) = 1/L_\sigma \int_{-\infty}^{t} \underline{u}_{osw}(t)dt$$

avec

$$\underline{u}_{osw} = \underline{u}_s - \underline{u}*_{s1}$$

et

$$L_\sigma = L_{\sigma M/k}$$

$L_{\sigma M}$ désignant l'inductance de fuite du modèle et k le facteur de proportionnalité déterminé.

**4.** Procédé suivant la revendication 2, selon lequel le vecteur de consigne ($\underline{i}'_{oswstat}$) du courant du modèle de l'oscillation harmonique est calculé conformément à la relation suivante :

$$\underline{i}'_{oswstat}(a_i) = 1/L_\sigma \int_0^t (\underline{u}_{sk}(a_i) - \underline{u}_{s1}(a_i)) dt + \underline{c}$$

avec

$\underline{a}_I$ = constante = modulation

$\underline{c}$ = constante d'intégration

la constante d'intégration ($\underline{c}$) étant déterminée conformément à la relation suivante.

$$\underline{c} = -1/T \int_{t-T}^t 1/L_\sigma \int_0^t (\underline{u}_{sk}(a_i) - \underline{u}_{s1}(a_i)) dt \, dt$$

5. Procédé suivant la revendication 1 ou 2, selon lequel la constante de proportionnalité (k) est la moyenne arithmétique de constantes réelles et imaginaires calculées ($k_1$, $k_2$), qui sont déterminées respectivement moyennant l'utilisation de la méthode de la régression linéaire.

6. Procédé suivant la revendication 5, selon lequel la composante réelle (k1) est calculée conformément à la relation suivante :

$$k1 = \frac{N * \sum^N (i_{oswr} * i_{sr}) - \sum^N i_{oswr} * \sum^N i_{sr}}{N * \sum^N i_{oswr}^2 - (\sum^N i_{oswr})^2}$$

et la composante imaginaire (k2) est calculée conformément à la relation suivante :

$$k2 = \frac{N * \sum^N (i_{oswi} * i_{si}) - \sum^N i_{oswi} * \sum^N i_{si}}{N * \sum^N i_{oswi}^2 - (\sum^N i_{oswi})^2}$$

7. Dispositif (14) pour la mise en oeuvre du procédé suivant la revendication 1, comportant une unité de commande (6) pour un convertisseur de courant (4) comportant une machine d'induction (2) raccordée à sa sortie, et dans lequel un vecteur ($\underline{u}*_{s1}$) de la tension de commande et une fréquence angulaire ($\omega*$) sont présents sur le côté entrée de l'unité de commande (6), et dans lequel au côté entrée de ce dispositif (14) sont envoyés le vecteur ($\underline{u}*_s$) de la tension de commande, un vecteur spatial mesuré ($\underline{u}_s$) de la tension statorique et un vecteur spatial mesuré ($\underline{i}_s$) du courant statorique, et dans lequel le vecteur spatial mesuré ($\underline{u}_s$) de la tension statorique est envoyé à une entrée positive d'un premier amplificateur différentiel (18), à l'entrée négative duquel est appliqué le vecteur ($\underline{u}_{s1}$) de la tension de commande et dont la sortie est reliée à l'unité de calcul (22) servant à déterminer la constante de proportionnalité (k), et d'autre part un dispositif d'adaptation (24) pour l'asservissement d'un vecteur réel ($i'_{osw}$) du courant modèle de l'oscillation harmonique, et dans lequel l'unité de calcul (22) est raccordée côté sortie au dispositif d'adaptation (24), et dans lequel le vecteur spatial mesuré ($\underline{i}_s$) du courant statorique est envoyé à une entrée positive d'un second dispositif de formation de différence (20), à l'entrée négative duquel est appliqué un vecteur obtenu ($i_{osw}$) du courant de l'oscillation harmonique et dont la sortie est reliée d'une part à une autre entrée de l'unité de calcul (22) et d'autre part à une sortie du dispositif (14).

8. Dispositif (14) pour la mise en oeuvre du procédé suivant la revendication 2 comportant une unité de commande (6) pour un convertisseur de courant (4) au côté sortie duquel est raccordée une machine à courant triphasé (2), et dans lequel un vecteur ($\underline{u}*_{s1}$) de la tension de commande et une fréquence angulaire ($\omega*$) sont appliqués au côté entrée de l'unité de commande (6), et dans lequel le vecteur ($\underline{u}*_{s1}$) de la tension de commande et une suite, présente sur une sortie de l'unité de commande (6), de vecteurs discrets complexes d'état de commutation ($\underline{u}_{sk}$) sont envoyés à un modèle de machine (16), qui est relié, côté sortie, d'une part à l'unité de calcul (22) servant à déterminer la constante de proportionnalité (k) et d'autre part à un dispositif d'adaptation (24) pour l'asservissement d'un vecteur de consigne ($\underline{i}'_{oswstat}$) du courant de modèle de l'oscillation harmonique, et dans lequel l'unité de calcul (22) est reliée côté sortie au dispositif d'adaptation (24), et dans lequel le vecteur mesuré ($\underline{i}_s$) du courant statorique est envoyé à une entrée positive d'un dispositif de formation de différence (20), à l'entrée négative duquel est appliqué un vecteur obtenu ($\underline{i}_{osw}$) du courant de l'oscillation harmonique et dont la sortie est reliée d'une part à une autre entrée de l'unité de calcul (22) et d'autre part à une sortie du dispositif (14).

9. Dispositif (14) suivant la revendication 7 ou 8, dans lequel un intégrateur est prévu en tant que modèle de machine (16).

10. Dispositif (14) suivant la revendication 7 ou 8, dans lequel il est prévu un micro-ordinateur.

FIG 1

FIG 2